# FASCICULE DE BREVET EUROPEEN

(11) **EP 2 556 447 B1**
(45) Date de publication et mention de la délivrance du brevet: **29.04.2020**
(21) Numéro de dépôt: 11715590.3
(22) Date de dépôt: 22.03.2011
(51) Int. Cl.: G06F 16/178

(54) **GESTION DE PARTAGE DE FICHIERS INFORMATIQUES ENTRE AU MOINS DEUX DISPOSITIFS**
VERWALTUNG VON EDV-DATEIFREIGABE ZWISCHEN MINDESTENS ZWEI GERÄTEN
MANAGEMENT OF COMPUTER FILE SHARING BETWEEN AT LEAST TWO DEVICES

(30) Priorité: 08.04.2010 FR 1052659
(43) Date de publication de la demande: 13.02.2013
(73) Titulaire: Orange, 75015 Paris (FR)
(72) Inventeur: LANDAIS, Gilbert, F-35530 Servon Sur Vilaine (FR)
(74) Mandataire: Plasseraud IP
(86) Numéro de dépôt international: PCT/FR2011/050607
(87) Numéro de publication internationale: WO 2011/124804

(56) Documents cités:
- US-A1- 2010 030 739
- ANDERSON P: "Managing program binaries in a heterogeneous Unix network", USENIX ASSOCIATION. PROC. OF THE 5TH LARGE INSTALLATION SYSTEMS ADMINISTRATION CONFERENCE USENIX ASSOC BERKELEY, CA, USA, [Online] 30 septembre 1991 (1991-09-30), - 3 octobre 1991 (1991-10-03), pages 1-9, XP002608472, Extrait de l'Internet: URL:http://homepages.inf.ed.ac.uk/dcspaul/ publications/LISA5_Paper.pdf> [extrait le 2010-11-01]
- MINKYONG KIM ET AL: "Safety, visibility, and performance in a wide-area file system", PROCEEDINGS OF FAST. CONFERENCE ON FILE AND STORAGE TECHNOLOGIES, USENIX, US, 1 janvier 2002 (2002-01-01), pages 131-144, XP002477963, ISBN: 978-1-880446-03-4
- SAITO Y ET AL: "TAMING AGGRESSIVE REPLICATION IN THE PANGAEA WIDE-AREA FILE SYSTEM", 4TH SYMPOSIUM ON OPERATING SYSTEMS DESIGN AND IMPLEMENTATION. OCT. 23-25, 2000, SAN DIEGO, CA, USENIX ASSOCIATION, US, 9 décembre 2002 (2002-12-09), pages 15-30, XP009068269,

## Description

La présente invention concerne le domaine de la gestion du stockage de fichiers informatiques sur plusieurs dispositifs de stockage interconnectés. Plus particulièrement, l'invention vise la gestion de ces fichiers dans le cadre de leur partage pour un accès aux fichiers stockés auprès des dispositifs, à partir de l'un quelconque de ces dispositifs. Un procédé de gestion de la distribution de ressources logicielles est par exemple décrit dans l'article de Paul ANDERSON intitulé "Managing Program Binaries in a Heterogeneous Unix Network", LISA V, Sep. 30 - Oct. 3, 1991 - San Diego, CA.

Avec la multiplication des dispositifs domestiques aptes à stocker des fichiers informatiques, les utilisateurs de ces dispositifs rencontrent une difficulté à gérer l'ensemble des fichiers stockés.

Il est aujourd'hui courant de disposer d'un ou plusieurs ordinateurs personnels, d'un dispositif d'accès à un réseau de distribution de flux multimédia avec capacité de stockage (« Set Top Box »), ou autre. L'utilisateur dispose alors d'une multiplicité de fichiers répartis sur ces différents appareils.

Pour accéder aux fichiers stockés dans un dispositif particulier, l'utilisateur doit s'adapter au système de fichier de ce dispositif. Quand bien même les dispositifs sont interconnectés en réseau, pour accéder à partir d'un dispositif à un fichier stocké sur un autre dispositif, l'utilisateur doit composer avec l'organisation spécifique des fichiers sur chaque dispositif.

Il en résulte une difficulté d'utilisation pour garder une vue d'ensemble simple et cohérente de l'ensemble des fichiers informatiques (texte, audio, vidéo, image, ou autre) sur la diversité des dispositifs dont l'utilisateur dispose.

Il existe donc un besoin pour une gestion transparente pour l'utilisateur et efficace des fichiers informatiques stockés sur différents dispositifs communicants.

La présente invention vise à apporter une amélioration de la gestion des fichiers sur ces dispositifs.

A cet effet, selon un premier aspect de l'invention, il est proposé un procédé de gestion de fichiers informatiques selon la revendication 1.

Un élément de l'arborescence correspond par exemple à un fichier ou à un dossier (ou sous-dossier).

Un descripteur peut, en outre, comporter une ou plusieurs informations telles que le nom, le type, ou la taille en mémoire de l'élément.

L'incorporation du descripteur se fait, par exemple, en ajoutant une feuille dans la première arborescence.

On peut, en outre, prévoir l'ajout d'un nœud pour décrire, par exemple, un dossier.

Selon le premier aspect de l'invention, un espace documentaire unique est créé pour l'utilisateur du premier dispositif en permettant l'accès à la fois à des éléments présents au sein du premier et du deuxième dispositifs. Lorsque le procédé est mis en œuvre sur chaque dispositif dont dispose l'utilisateur (ou le groupe d'utilisateurs, par exemple une famille), sur chaque dispositif la même vue de son espace documentaire (ou d'une partie de son espace documentaire) est obtenue, c'est-à-dire la même arborescence (ou sous-arborescence) de dossiers et les mêmes fichiers contenus.

Le procédé selon l'invention apporte à l'utilisateur une simplification des manipulations à effectuer pour accéder à des fichiers stockés sur différents dispositifs. En effet, il est apporté à l'utilisateur une vue unique et cohérente de l'ensemble de ses fichiers et dossiers, un partage de fichiers transparent, et une gestion optimale (par exemple, modifications, sauvegarde ou autre).

Par exemple, la comparaison des niveaux se fait élément par élément, d'après le premier critère et le deuxième critère.

Le contenu d'un élément correspond par exemple au contenu binaire pour un fichier.

Ainsi, une vérification fine de la présence de deux éléments identiques au sein du premier et du deuxième dispositifs peut être opérée.

Il peut, en outre, être prévu que les première et deuxième arborescences soient associées respectivement à une première information de version et une deuxième information de version représentant respectivement un état de modification dans le temps des première et deuxième arborescences, le procédé comporte alors en outre les étapes de :
- transmission d'une requête vers le deuxième dispositif pour recevoir des données représentatives de la deuxième information de version,
- comparaison des première et deuxième informations de version pour déterminer si la version de la première arborescence est antérieure à la version de la deuxième arborescence, et
- dans le cas où la version de la première arborescence est antérieure à la version de la deuxième arborescence, transmission d'une requête pour obtenir les données représentatives du niveau de la deuxième structure de données de même rang que le niveau courant de la première arborescence.

Ainsi, chaque dispositif peut connaître la fraîcheur des informations dont il dispose à propos des éléments présents auprès d'autres dispositifs.

Par exemple, en cas de déconnexion avec le deuxième dispositif suivie d'une reconnexion, le premier dispositif peut savoir au moyen de l'information de version si la deuxième arborescence a évolué et s'il est utile de procéder à une nouvelle comparaison des arborescences pour mettre à jour la première arborescence.

Le procédé peut en outre comporter les étapes de :
- comparaison du niveau courant avec le niveau de même rang de la deuxième structure représenté par les données reçues, pour déterminer la présence dans la première arborescence au niveau de rang du niveau courant, d'un descripteur d'un élément de la deuxième arborescence, cet élément n'étant plus présent dans la deuxième arborescence au niveau courant dans la deuxième version, et
- dans le cas où l'élément n'est plus présent dans la deuxième arborescence, suppression du descripteur de cet élément dans la première structure de données arborescente au niveau courant.

Ainsi, il est possible de garder une cohérence de la première arborescence avec les modifications apportées dans les éléments de la deuxième arborescence.

Afin de garder les arborescences d'un ensemble de dispositifs synchrones, il est possible de prévoir que, lors de la mise à jour d'un fichier sur le premier dispositif, la première information de version est mise à jour, puis diffusée vers d'autres dispositifs dans un message de notification de modification de version.

Par exemple, la requête vers le deuxième dispositif pour recevoir des données représentatives de la deuxième information de version est transmise après réception d'un message du deuxième dispositif indiquant une modification de version de la deuxième arborescence.

Afin d'accéder à un élément du deuxième dispositif à partir d'un descripteur de la première arborescence, le premier dispositif peut en outre :
- envoyer une requête vers au moins un autre dispositif pour l'interroger sur la présence de l'élément auprès de cet au moins un autre dispositif, et
- dans le cas où l'élément est présent auprès dudit au moins un autre dispositif, le premier dispositif obtient une copie de l'élément pour la stocker dans une mémoire auprès du premier dispositif.

On peut ainsi réaliser des copies de fichiers pour synchroniser les contenus des première et deuxième arborescences.

Selon d'autres aspects de l'invention, il est prévu :
- un programme d'ordinateur comportant des instructions pour la mise en œuvre d'un procédé selon le premier aspect de l'invention lorsque le programme est exécuté par un processeur ;
- un support lisible par un ordinateur sur lequel est enregistré un tel programme d'ordinateur ;
- un dispositif selon la revendication 8 ; et
- un système comportant des dispositifs pour la mise en œuvre d'un procédé selon la revendication 1.

Les avantages procurés par le programme d'ordinateur, le support lisible par ordinateur, le dispositif, et le système, tels que succinctement exposés ci-dessus, sont au moins identiques à ceux mentionnés plus haut en liaison avec le procédé selon le premier aspect.

D'autres caractéristiques et avantages de l'invention apparaîtront encore à la lecture de la description qui va suivre. Celle-ci est purement illustrative et doit être lue en regard des dessins annexés sur lesquels:
- la figure 1 illustre un contexte général de mise en œuvre de modes de réalisation de l'invention ;
- la figure 2 est un organigramme général représentant des étapes mises en œuvre pour mettre à jour une arborescence de fichiers commune selon un mode de réalisation;
- les figures 3a et 3b illustrent deux arborescences de fichiers et le résultat de la mise à jour d'une arborescence avec des informations de l'autre arborescence selon un mode de réalisation;
- la figure 4 illustre l'accès à un élément d'une arborescence d'un dispositif correspondant à un fichier ou un dossier qui n'est pas présent localement, le dispositif selon un mode de réalisation ;
- la figure 5 illustre une synchronisation des arborescences des dispositifs interconnectés selon un mode de réalisation;
- la figure 6 illustre schématiquement un système et des dispositifs selon un mode de réalisation.

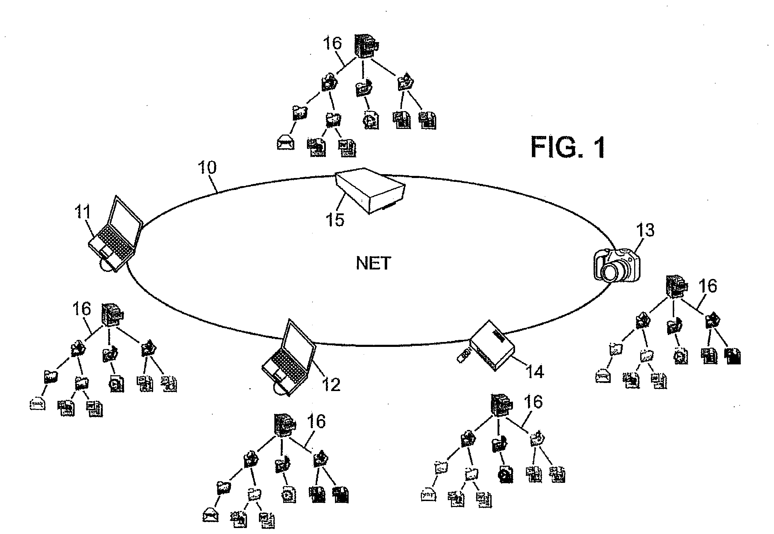

La figure 1 illustre un contexte général de mise en œuvre de modes de réalisation de l'invention. Dans ce contexte, un ensemble de dispositifs aptes à stocker et à échanger des fichiers informatiques sont connectés les un aux autres, par exemple, via un réseau 10. Dans un autre contexte (non représenté), les dispositifs pourraient être connectés directement les uns aux autres. L'ensemble de dispositifs comporte par exemple deux ordinateurs personnels 11 et 12 de type PC, un appareil photo numérique 13, une « Set Top Box » 14, et un dispositif de stockage de fichiers 15 de type NAS (« Network Attached Storage »).

Chaque dispositif peut stocker des fichiers informatiques tels que des fichiers texte, audio, image, vidéo, ou autre. En outre, les dispositifs interconnectés par le réseau 10 peuvent échanger des fichiers.

Par exemple, l'ordinateur 11 peut transmettre un fichier qu'il stocke dans sa mémoire, vers l'ordinateur 12 afin qu'il le stocke dans sa mémoire.

On se propose d'offrir à l'utilisateur une vue sur une arborescence de fichiers 16 regroupant de la même manière l'ensemble des fichiers stockés sur les dispositifs interconnectés, et ce, à partir de n'importe quel dispositif.

Chaque dispositif affiche ainsi une arborescence qui présente des fichiers et des dossiers, indépendamment du fait qu'il stocke effectivement ou non tous les fichiers et tous les dossiers présentés dans l'arborescence. Afin d'indiquer qu'un fichier ou un dossier de l'arborescence n'est pas stocké localement sur un dispositif, ce fichier ou ce dossier peut, par exemple, être affiché en grisé.

Ainsi, qu'il consulte les fichiers de l'ordinateur 11 ou de la Set Top Box 14 (ou autre), l'utilisateur peut retrouver un fichier stocké dans n'importe lequel des dispositifs. L'utilisateur peut retrouver un fichier dans l'arborescence, peu importe le lieu de son stockage effectif, et peu importe le dispositif à partir duquel l'utilisateur souhaite le consulter.

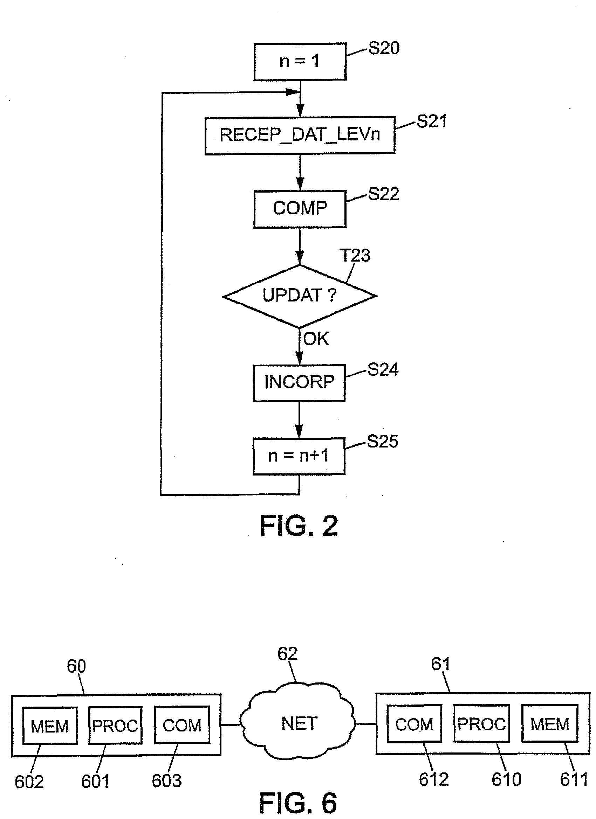

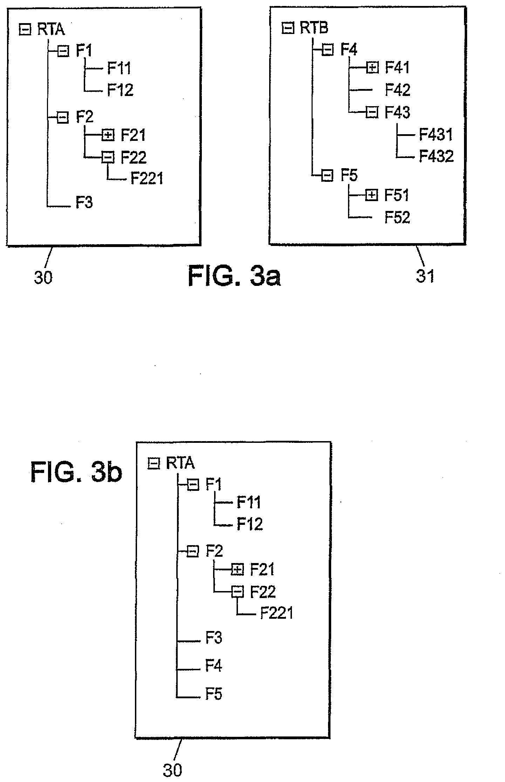

La mise à jour de l'arborescence sur chaque dispositif est décrite dans la suite, en référence aux figures 2, 3a et 3b. La figure 2 est un organigramme général représentant des étapes mises en œuvre pour mettre à jour l'arborescence, et les figures 3a et 3b illustrent la mise à jour de l'arborescence d'un dispositif avec les données représentant une autre arborescence d'un deuxième dispositif.

Le procédé de création de l'arborescence peut être mis en œuvre indifféremment par les dispositifs interconnectés 11, 12, 13, 14, et 15.

Le dispositif mettant en œuvre le procédé, par exemple le dispositif 11, dispose d'une structure de données représentant une arborescence 30. Cette arborescence a une racine RTA à partir de laquelle tous les fichiers et tous les dossiers sont accessibles dans le dispositif. Ainsi, à partir de la racine RTA, il est possible d'accéder à un dossier F1, un dossier F2, et un fichier F3 comme représenté sur la figure 3. Le dossier F1 comporte un fichier Fil et un fichier F12. Le dossier F2 comporte un dossier F21, lui-même comportant d'autres dossiers et fichiers non représentés, et un dossier F22 comportant un fichier F221.

Lors d'une première étape d'initialisation S20, le dispositif 11 se place au premier niveau de l'arborescence RTA, c'est-à-dire au niveau des descendants direct de la racine, en l'occurrence les dossiers F1 et F2, et le fichier F3. L'objectif est de comparer ce premier niveau avec le premier niveau de l'arborescence 31 d'un autre dispositif, par exemple le dispositif 12, avec lequel il partage des fichiers.

La structure arborescente 31 représente les fichiers disponibles auprès du dispositif 12. Cette structure arborescente comporte une racine RTB à partir de laquelle il est possible d'accéder à deux dossiers F4 et F5. Le dossier F4 comporte un dossier F41 comportant lui-même des dossiers et des fichiers non représentés, un fichier F42, et un autre dossier F43 comportant deux fichiers F431 et F432. Le dossier F5 comporte un dossier F51 comportant lui-même des fichiers et des dossiers non représentés, et un fichier F52.

Lors de l'étape S21, le dispositif 12 reçoit des données représentatives du niveau de l'arborescence 31, de même rang que le niveau courant de l'arborescence 30. Par exemple, si le dispositif 11 s'est placé au niveau de rang N de l'arborescence 30, il reçoit les données représentatives du niveau de rang N de l'arborescence 31. Le dispositif reçoit par exemple une liste d'éléments (fichiers, dossiers, et sous-dossiers), avec des attributs tels que par exemple la taille en mémoire, le type de fichier, ou autre.

Les données peuvent être reçues suite à l'envoi d'un message du dispositif 11 en ce sens, ou suite à une synchronisation de l'arborescence 30 comme il est décrit par la suite.

Le dispositif 11 procède alors à la comparaison des niveaux de même rang lors de l'étape S22. Par exemple, le dispositif 11 procède à une comparaison élément par élément d'après le nom, la taille en mémoire ou encore le contenu des éléments. Cette comparaison vise à déterminer la présence dans le niveau de l'arborescence 31 d'éléments qui ne seraient pas présents dans le niveau de l'arborescence 30.

Par exemple, le dispositif 11 commence par vérifier, dans le premier niveau de l'arborescence 30, s'il existe un dossier nommé « F4 », puis s'il existe un dossier nommé « F5 ».

Il est alors décidé ensuite lors de l'étape T23 si l'arborescence 30 doit être mise à jour.

Selon un premier exemple, il est supposé que les éléments F4 et F5 n'ont pas le même nom que les éléments F1, F2, et F3. L'arborescence 30 est alors modifiée lors de l'étape S24 par incorporation dans le niveau courant d'un descripteur des éléments F4 et F5 permettant d'accéder à ces éléments sur le deuxième dispositif 12. La nouvelle arborescence 30 ainsi obtenue est illustrée par la figure 3b. Ce descripteur comporte un nom pour désigner l'élément, un indicateur de stockage (par exemple une identification du dispositif qui le stocke), un mode de sauvegarde, un numéro de version (comme il est discuté dans la suite), ou autre.

Selon un deuxième exemple, il est supposé que l'élément F4 a le même nom que l'élément F1. Il est alors procédé à une nouvelle comparaison selon un autre critère comme par exemple la taille en mémoire de ces éléments. Selon le résultat de cette deuxième comparaison, si les éléments ont des tailles en mémoire différentes, il est décidé de l'incorporation d'un descripteur de l'élément F4. Si un tel descripteur est incorporé, il peut par exemple porter un nom différent de l'élément F1 pour éviter de les confondre.

Selon un troisième exemple, il est supposé que l'élément F4 a le même nom que l'élément F1. Il est alors tenté de déterminer si ces éléments diffèrent par leur contenu, et il est alors accédé à un deuxième niveau de l'arborescence 30 comportant les éléments Fil et F12 issus de l'élément F1 du premier niveau. Il est alors obtenu, sur requête du dispositif 11, des données du dispositif 12 décrivant les éléments F41, F42, F43 du niveau correspondant dans l'arborescence 31. Il est ensuite effectué une comparaison du contenu des éléments F1 et F4 et il est décidé d'incorporer ou non un descripteur de l'élément F4 dans l'arborescence 30.

Lorsque les éléments du niveau courant de l'arborescence 31 sont incorporés, le dispositif 11 passe au niveau suivant lors de l'étape S25.

Le nombre de niveaux à parcourir ainsi peut être réglé selon qu'il est souhaité de modifier l'arborescence 30 plus ou moins en profondeur. Plus il est souhaité de modifier l'arborescence en profondeur, plus il est parcouru de niveaux.

Alternativement, il peut être décidé de ne parcourir un niveau qu'à condition qu'un utilisateur du deuxième dispositif ait accédé à ce niveau.

Alternativement encore, il peut être prévu des accès aux différents niveaux de l'arborescence, selon des mises à jour automatiques.

Avec une arborescence ainsi mise à jour, un utilisateur peut accéder à partir de n'importe quel dispositif à des fichiers stockés dans un autre dispositif.

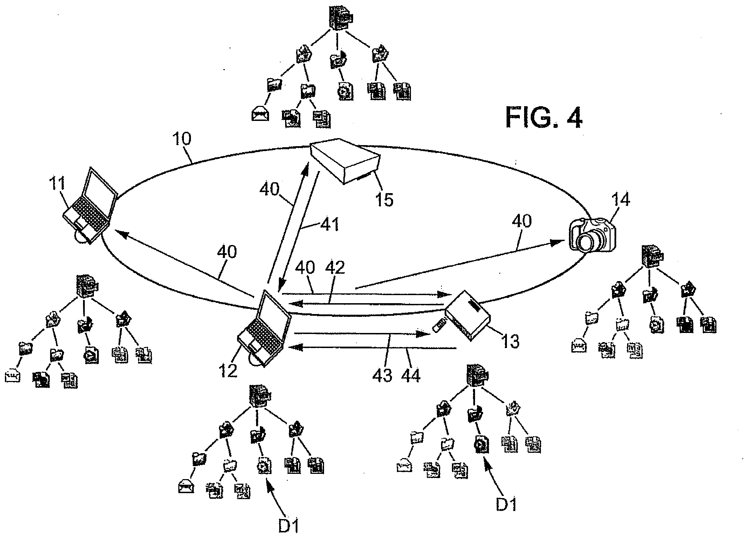

Comme illustré par la figure 4, lors de l'accès à un élément d'une arborescence d'un dispositif correspondant à un fichier ou un dossier qui n'est pas présent localement, le dispositif peut envoyer des requêtes vers les autres dispositifs afin de copier localement le fichier ou le dossier pour pouvoir ensuite y accéder.

Dans cet exemple, le dispositif 12 souhaite accéder au fichier D1 qui ne se trouve pas être stocké dans le dispositif 12. Le dispositif 12 émet alors des requêtes 40 vers tous les dispositifs 11, 13, 14, et 15 afin de les interroger pour savoir s'ils stockent ce fichier.

Par exemple, le dispositif 15 renvoie un message 41 pour répondre qu'il ne dispose pas du fichier, les dispositifs 11 et 14 ne répondent pas, et le dispositif 13 renvoie un message 42 pour indiquer qu'il dispose du fichier.

Le dispositif envoie alors un message 43 vers le dispositif 13 pour obtenir une copie du fichier D1. Le dispositif 13 renvoie alors un message 44 contenant les données du fichier D1.

Si plusieurs dispositifs peuvent fournir D1, un choix pour l'envoi du message 43 peut être effectué en fonction du débit disponible ou autre.

Une fois le fichier D1 copié localement, il peut être ouvert sur le dispositif 12.

Lorsque chaque dispositif a mis à jour sa propre arborescence afin de faire apparaître les éléments présents dans les autres dispositifs, il peut, en outre, être prévu des mécanismes de mise à jour et de synchronisation de ces arborescences en fonction d'événements sur le réseau constitué par l'ensemble des dispositifs.

Afin de gérer ces synchronisations, il peut être introduit une notion de version des arborescences et des éléments qui les composent. Par exemple, chaque arborescence de chaque dispositif est associée à un numéro de version.

Ces informations de version peuvent être utilisées pour la comparaison de l'étape S22 décrite ci-avant. Dans ce cas, il peut être décidé de n'incorporer que les éléments de l'arborescence 31 qui ont une version postérieure à la version de l'arborescence 30.

Lors de l'écriture d'un élément après modification, une notification de changement peut être diffusée vers les autres dispositifs afin d'assurer que chaque dispositif de l'ensemble de dispositifs interconnectés puisse mettre à jour son arborescence. Dans le cas d'une reconnexion au réseau d'un dispositif resté déconnecté durant une durée donnée, une phase de synchronisation peut permettre de remettre à jour son arborescence conformément aux changements qui ont pu intervenir dans l'organisation des fichiers et des dossiers des autres dispositifs. De plus, pour la prise en compte aussi rapide que possible des modifications effectuées dans les fichiers sur les autres dispositifs, il peut être prévu de mettre en œuvre sur chaque dispositif un mécanisme d'écoute (telle qu'une boucle d'attente) pour recevoir des notifications de changement circulant dans le réseau, un mécanisme de rafraîchissement qui déclenche (périodiquement, sur la détection d'événements prédéfinis, ou autre) une action de synchronisation, ou autre.

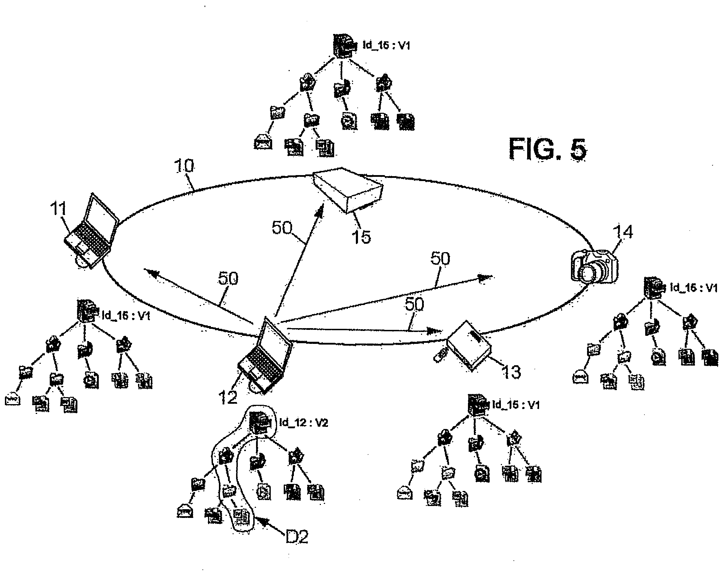

A chaque élément d'une arborescence, est associé un numéro de version (ou révision). Sur chaque dispositif, un numéro global de révision est affecté à l'arborescence. La figure 5 illustre une synchronisation des arborescences des dispositifs interconnectés. Un identifiant désignant le dispositif qui a créé la dernière révision lui est en outre associé. Par exemple, "Id_15 : VI" désigne la révision V1 créée sur le dispositif 15. Dans l'exemple, après un état où tous les dispositifs étaient en révision Id_15 : V1, une modification apportée sur le dispositif 12 a fait passer celui-ci à l'état Id_12 : V2.

Sur le dispositif 12, après avoir modifié un fichier D2, l'utilisateur sauvegarde ses modifications. Ce document prend alors le numéro de révision Id_12 : V2 qui se propage, en remontant l'arborescence des dossiers, à la racine l'arborescence. Ce nouveau numéro de révision est alors affecté à tous les dossiers du chemin d'accès au document.

Ensuite, le dispositif 12 diffuse un message 50 pour informer les autres dispositifs de la création de la nouvelle révision Id_12 : V2.

Une synchronisation est alors effectuée entre le dispositif 12 et les autres dispositifs, pour que les autres dispositifs puissent mettre à jour leur arborescence conformément à la modification apportée au fichier D2.

Le même type de synchronisation peut être prévu pour une création ou une suppression de fichier ou de dossier.

En alternative à la diffusion du message 50, il peut être prévu que périodiquement, ou après une reconnexion, chaque dispositif, par exemple le dispositif 15, envoie une requête vers les autres dispositifs pour recevoir le numéro de version de leur arborescence courante. Ensuite, sur réception du numéro de version des autres dispositifs, le dispositif 15 compare ces numéros de version à la version de son arborescence courante. Si le dispositif détermine que son arborescence a une version antérieure à la version d'une arborescence d'un dispositif qui lui a retourné son numéro de version, il entame la mise à jour de son arborescence comme déjà décrit ci-avant. Dans l'exemple de la figure 5, le dispositif 15 détermine que la version V1 de son arborescence est antérieure à la version V2 de l'arborescence du dispositif 12.

Lors de la mise à jour, le dispositif peut détecter que son arborescence courante comporte un descripteur d'un élément qui d'après la version V1 est stocké auprès du dispositif 12 mais qui n'est pas présent auprès du dispositif 12 dans la version V2. Dans ce cas, il est prévu la suppression de ce descripteur pour mettre en conformité l'arborescence du dispositif 15 avec celle du dispositif 12.

Un programme d'ordinateur comportant des instructions pour la mise en œuvre du procédé selon l'invention peut être réalisé par la personne du métier selon un algorithme général déduit de l'organigramme général de la figure 2, et de la présente description détaillée.

La figure 6 illustre schématiquement un système selon un mode de réalisation de l'invention. Le système comporte un dispositif 60 connecté à un autre dispositif 61 via un réseau de communication 62.

Le dispositif 60 comporte une unité de traitement 601 pour créer et/ou mettre à jour une structure de données représentant une arborescence de fichiers permettant d'accéder à des fichiers stockés au sein de l'unité de mémoire 602 du dispositif selon un procédé selon la présente invention. L'unité de mémoire 602 peut comporter différents types de mémoire. Par exemple l'unité de mémoire comporte une mémoire pour stocker des données de calcul. L'unité de mémoire peut également comporter une mémoire pour le stockage d'un programme d'ordinateur selon la présente invention pour son exécution par un processeur de l'unité de traitement. Le dispositif comporte en outre une unité de communication 603 pour communiquer notamment avec le dispositif 61 via le réseau 62 pour mettre en œuvre un procédé selon l'invention et échanger des fichiers informatiques. Le dispositif 61 a une structure similaire à celle du dispositif 60 et comporte une unité de traitement 610, une unité de mémoire 611, et une unité de communication 612.

La présente invention ne se limite pas aux formes de réalisation présentées. D'autres variantes et modes de réalisation peuvent être déduits et mis en œuvre par la personne du métier à la lecture de la présente description et des figures annexées.

## Revendications

1. Procédé de gestion de fichiers informatiques dans un premier dispositif apte à stocker des fichiers informatiques, et apte à être connecté avec au moins un deuxième dispositif pour échanger au moins des fichiers informatiques, ledit premier dispositif stockant les fichiers selon une première structure de données représentant une première arborescence de fichiers (30) permettant d'accéder à des fichiers stockés dans un espace mémoire du premier dispositif, les descendants de la racine de la première arborescence correspondant à un premier niveau de l'arborescence, les descendants de nœuds du premier niveau correspondant à un deuxième niveau de l'arborescence et ainsi de suite,
le procédé comportant les étapes suivantes :
- pour un niveau courant de la première arborescence, réception (S21) de données représentatives d'un niveau de même rang d'une deuxième structure de données représentant une deuxième arborescence de fichiers (31) permettant d'accéder à des fichiers stockés au sein du deuxième dispositif, les descendants de la racine de la deuxième arborescence correspondant à un premier niveau de l'arborescence, les descendants de nœuds du premier niveau correspondant à un deuxième niveau de l'arborescence et ainsi de suite,
- comparaison (S22) du niveau courant avec le niveau de même rang de la deuxième structure représenté par les données reçues, pour déterminer la présence dans la deuxième arborescence au niveau de rang du niveau courant, d'un élément qui n'est pas présent dans la première arborescence au niveau courant, et
- dans le cas où un élément de la deuxième arborescence n'est pas présent dans la première arborescence, incorporation (S24) d'un descripteur de cet élément dans la première structure de données arborescente au niveau courant, ledit descripteur permettant d'accéder audit élément à partir de la première arborescence,
dans lequel lors de la comparaison des niveaux, il est en outre déterminé si un premier élément de la première arborescence et un deuxième élément de la deuxième arborescence sont identiques d'après un premier critère de comparaison,
**caractérisé en ce que**, dans ce cas, les étapes suivantes sont mises en œuvre :
- comparaison des premier et deuxième éléments selon un deuxième critère pour déterminer si les premier et deuxième éléments sont différents selon le deuxième critère, et
- dans le cas où les premier et deuxième éléments sont différents selon le deuxième critère, incorporation d'un descripteur du deuxième élément dans la première structure de données arborescente au niveau courant, ledit descripteur permettant d'accéder audit deuxième élément à partir de la première arborescence,
et dans lequel le premier critère est le nom de l'élément et le deuxième critère est la taille en mémoire ou le contenu de l'élément.

2. Procédé selon la revendication 1, dans lequel les première et deuxième arborescences sont associées respectivement à une première information de version et une deuxième information de version représentant respectivement un état de modification dans le temps des première et deuxième arborescences, le procédé comportant en outre les étapes de :
- transmission d'une requête vers le deuxième dispositif pour recevoir des données représentatives de la deuxième information de version,
- comparaison des première et deuxième informations de version pour déterminer si la version de la première arborescence est antérieure à la version de la deuxième arborescence, et
- dans le cas où la version de la première arborescence est antérieure à la version de la deuxième arborescence, transmission d'une requête pour obtenir les données représentatives du niveau de la deuxième structure de données de même rang que le niveau courant de la première arborescence.

3. Procédé selon la revendication 2, comportant en outre les étapes de :
- comparaison du niveau courant avec le niveau de même rang de la deuxième structure représenté par les données reçues, pour déterminer la présence dans la première arborescence au niveau de rang du niveau courant, d'un descripteur d'un élément de la deuxième arborescence, cet élément n'étant plus présent dans la deuxième arborescence au niveau courant dans la deuxième version, et
- dans le cas où l'élément n'est plus présent dans la deuxième arborescence, suppression du descripteur de cet élément dans la première structure de données arborescente au niveau courant.

4. Procédé selon la revendication 2, dans lequel lors de la mise à jour d'un fichier sur le premier dispositif, la première information de version est mise à jour, puis diffusée vers d'autres dispositifs dans un message de notification de modification de version.

5. Procédé selon la revendication 2, dans lequel la requête vers le deuxième dispositif pour recevoir des données représentatives de la deuxième information de version est transmise après réception d'un message du deuxième dispositif indiquant une modification de version de la deuxième arborescence.

6. Procédé selon la revendication 1, dans lequel, pour accéder à un élément du deuxième dispositif à partir d'un descripteur de la première arborescence, le premier dispositif:
- envoie une requête vers au moins un autre dispositif pour l'interroger sur la présence de l'élément auprès dudit au moins un autre dispositif, et
- dans le cas où l'élément est présent auprès dudit au moins un autre dispositif, le premier dispositif obtient une copie de l'élément pour la stocker dans une mémoire auprès du premier dispositif.

7. Programme d'ordinateur comportant des instructions pour la mise en œuvre d'un procédé selon la revendication 1, lorsqu'il est exécuté par un processeur.

8. Dispositif comportant :
- une unité de communication (603, 612) pour envoyer et recevoir des messages pour échanger au moins des fichiers informatiques avec au moins un deuxième dispositif,
- une unité de mémoire (602, 611) pour stocker des fichiers informatiques, et
- une unité de traitement (601, 610) pour la gestion de fichiers informatiques selon une première structure de données représentant une première arborescence de fichiers permettant d'accéder à des fichiers stockés dans l'unité de mémoire,
les descendants de la racine de la première arborescence correspondant à un premier niveau de l'arborescence, les descendants de nœuds du premier niveau correspondant à un deuxième niveau de l'arborescence et ainsi de suite,
ladite unité de traitement étant configurée pour mettre en œuvre le procédé selon la revendication 1.

9. Système comportant:
- un premier dispositif (60) selon la revendication 8, apte à stocker des fichiers informatiques et à les échanger avec au moins un deuxième dispositif, et
- au moins un deuxième dispositif (61) apte à stocker des fichiers informatiques et à les échanger avec le premier dispositif.

## Patentansprüche

1. Verfahren zur Verwaltung von Computerdateien in einer ersten Vorrichtung, die geeignet ist, Computerdateien zu speichern, und geeignet ist, mit wenigstens einer zweiten Vorrichtung verbunden zu sein, um wenigstens Computerdateien auszutauschen, wobei die erste Vorrichtung die Dateien gemäß einer ersten Datenstruktur speichert, die einen ersten Dateibaum (30) darstellt, der es gestattet, auf Dateien zuzugreifen, die in einem Speicherraum der ersten Vorrichtung gespeichert sind, wobei die Nachfahren der Wurzel des ersten Baums einer ersten Ebene des Baums entsprechen, die Nachfahren von Knoten der ersten Ebene einer zweiten Ebene des Baums entsprechen und so weiter,
wobei das Verfahren die folgenden Schritte aufweist:
- für eine aktuelle Ebene des ersten Baums, Empfangen (S21) von Daten, die für eine Ebene gleichen Rangs einer zweiten Datenstruktur repräsentativ sind, die einen zweiten Dateibaum (31) darstellt, der es gestattet, auf Dateien zuzugreifen, die innerhalb der zweiten Vorrichtung gespeichert sind, wobei die Nachfahren der Wurzel des zweiten Baums einer ersten Ebene des Baums entsprechen, wobei die Nachfahren von Knoten der ersten Ebene einer zweiten Ebene des Baums entsprechen und so weiter,
- Vergleichen (S22) der aktuellen Ebene mit der Ebene gleichen Rangs der zweiten Struktur, die durch die empfangenen Daten dargestellt wird, um das Vorhandensein eines Elements in dem zweiten Baum auf der Ebene des Rangs der aktuellen Ebene zu bestimmen, das in dem ersten Baum auf der aktuellen Ebene nicht vorhanden ist, und
- in dem Fall, dass ein Element des zweiten Baums in dem ersten Baum nicht vorhanden ist, Einfügen (S24) eines Deskriptors dieses Elements in die erste Baum-Datenstruktur auf der aktuellen Ebene, wobei es der Deskriptor gestattet, auf das Element ausgehend von dem ersten Baum zuzugreifen,
wobei beim Vergleichen der Ebenen ferner bestimmt wird, ob ein erstes Element des ersten Baums und ein zweites Element des zweiten Baums gemäß einem ersten Vergleichskriterium identisch sind,
**dadurch gekennzeichnet, dass** in diesem Fall die folgenden Schritte durchgeführt werden:
- Vergleichen des ersten und zweiten Elements gemäß einem zweiten Kriterium, um zu bestimmen, ob das erste und zweite Element gemäß dem zweiten Kriterium verschieden sind, und
- in dem Fall, dass das erste und zweite Element gemäß dem zweiten Kriterium verschieden sind, Einfügen eines Deskriptors des zweiten Elements in die erste Baum-Datenstruktur auf der aktuellen Ebene, wobei es der Deskriptor gestattet, auf das zweite Element ausgehend von dem ersten Baum zuzugreifen,
und wobei das erste Kriterium der Name des Elements und das zweite Kriterium die Speichergröße oder der Inhalt des Elements ist.

2. Verfahren nach Anspruch 1, wobei der erste und zweite Baum jeweils einer ersten Versionsinformation und einer zweiten Versionsinformation zugeordnet sind, die jeweils einen zeitlichen Änderungsstand des ersten und zweiten Baums darstellen, das Verfahren ferner aufweisend die folgenden Schritte:
- Übertragen einer Anforderung an die zweite Vorrichtung, um Daten zu empfangen, die für die zweite Versionsinformation repräsentativ sind,
- Vergleichen der ersten und zweiten Versionsinformation, um zu bestimmen, ob die Version des ersten Baums älter als die Version des zweiten Baums ist, und
- in dem Fall, dass die Version des ersten Baums älter als die Version des zweiten Baums ist, Übertragen einer Anforderung, um die Daten zu erhalten, die für die Ebene der zweiten Datenstruktur des gleichen Rangs wie die aktuelle Ebene des ersten Baums repräsentativ sind.

3. Verfahren nach Anspruch 2, ferner aufweisend die folgenden Schritte:
- Vergleichen der aktuellen Ebene mit der Ebene gleichen Rangs der zweiten Struktur, die durch die empfangenen Daten dargestellt wird, um das Vorhandensein eines Deskriptors eines Elements des zweitens Baums in dem ersten Baum auf der Ebene des Rangs der aktuellen Ebene zu bestimmen, wobei dieses Element in dem zweiten Baum auf der aktuellen Ebene in der zweiten Version nicht mehr vorhanden ist, und
- in dem Fall, dass das Element in dem zweiten Baum nicht mehr vorhanden ist, Löschen des Deskriptors dieses Elements in der ersten Baum-Datenstruktur auf der aktuellen Ebene.

4. Verfahren nach Anspruch 2, wobei bei der Aktualisierung einer Datei auf der ersten Vorrichtung die erste Versionsinformation aktualisiert und dann an andere Vorrichtungen in einer Versionsänderungs-Benachrichtigungsmeldung verteilt wird.

5. Verfahren nach Anspruch 2, wobei die Anforderung an die zweite Vorrichtung, um Daten zu empfangen, die für die zweite Versionsinformation repräsentativ sind, nach Empfang einer Meldung der zweiten Vorrichtung übertragen wird, die eine Versionsänderung des zweiten Baums angibt.

6. Verfahren nach Anspruch 1, wobei, zum Zugriff auf ein Element der zweiten Vorrichtung ausgehend von einem Deskriptor des ersten Baums, die erste Vorrichtung:
- eine Anforderung an wenigstens eine andere Vorrichtung sendet, um sie über das Vorhandensein des Elements bei der wenigstens einen anderen Vorrichtung abzufragen, und
- in dem Fall, dass das Element bei der wenigstens einen anderen Vorrichtung vorhanden ist, die erste Vorrichtung eine Kopie des Elements erhält, um sie in einem Speicher bei der ersten Vorrichtung zu speichern.

7. Computerprogramm, das Anweisungen zur Durchführung eines Verfahrens nach Anspruch 1 aufweist, wenn es von einem Prozessor ausgeführt wird.

8. Vorrichtung, aufweisend:
- eine Kommunikationseinheit (603, 612), um Meldungen zu senden und zu empfangen, um wenigstens Computerdateien mit wenigstens einer zweiten Vorrichtung auszutauschen,
- eine Speichereinheit (602, 611), um Computerdateien zu speichern, und
- eine Verarbeitungseinheit (601, 610) zur Verwaltung von Computerdateien gemäß einer ersten Datenstruktur, die einen ersten Dateibaum darstellt, der es gestattet, auf Dateien zuzugreifen, die in der Speichereinheit gespeichert sind,
wobei die Nachfahren der Wurzel des ersten Baums einer ersten Ebene des Baums entsprechen, wobei die Nachfahren von Knoten der ersten Ebene einer zweiten Ebene des Baums entsprechen und so weiter,
wobei die Verarbeitungseinheit dazu ausgebildet ist, das Verfahren nach Anspruch 1 durchzuführen.

9. System, umfassend:
- eine erste Vorrichtung (60) nach Anspruch 8, die geeignet ist, Computerdateien zu speichern und sie mit wenigstens einer zweiten Vorrichtung auszutauschen, und
- wenigstens eine zweite Vorrichtung (61), die geeignet ist, Computerdateien zu speichern und sie mit der ersten Vorrichtung auszutauschen.

## Claims

1. Method for managing computer files in a first device capable of storing computer files, and capable of being connected to at least a second device for exchanging at least computer files, said first device storing the files according to a first data structure representing a first file tree (30) allowing files stored in a memory space of the first device to be accessed, the descendants of the root of the first tree corresponding to a first level of the tree, the descendants of nodes of the first level corresponding to a second level of the tree and so on,
the method comprising the following steps:
- for a current level of the first tree, receiving (S21) data that are representative of a level of the same rank of a second data structure representing a second file tree (31) allowing files stored within the second device to be accessed, the descendants of the root of the second tree corresponding to a first level of the tree, the descendants of nodes of the first level corresponding to a second level of the tree and so on;
- comparing (S22) the current level with the level of the same rank of the second structure, which level is represented by the received data, in order to determine the presence, in the second tree at the level of the same rank as the current level, of an element which is not present in the first tree at the current level;
- in the case that an element of the second tree is not present in the first tree, incorporating (S24) a descriptor of this element within the first tree data structure at the current level, said descriptor allowing said element to be accessed from the first tree,
wherein, when comparing the levels, it is further determined whether a first element of the first three and a second element of the second tree are identical according to a first comparison criterion,
**characterized in that**, in this case, the following steps are carried out:
- comparing the first and second elements according to a second criterion in order to determine whether the first and second elements are different according to the second criterion; and
- in the case that the first and second elements are different according to the second criterion, incorporating a descriptor of the second element within the first tree data structure at the current level, said descriptor allowing said second element to be accessed from the first tree, and wherein the first criterion is the name of the element and the second criterion is the memory size or the content of the element.

2. Method according to Claim 1, wherein the first and second trees are associated with a first item of version information and a second item of version information, respectively, which represent a state of change with time of the first and second trees, respectively, the method further including the steps of:
- transmitting a request to the second device in order to receive data that are representative of the second item of version information;
- comparing the first and second items of version information in order to determine whether the version of the first tree is older than the version of the second tree; and
- in the case that the version of the first tree is older than the version of the second tree, transmitting a request to obtain the data that are representative of the level of the second data structure of the same rank as the current level of the first tree.

3. Method according to Claim 2, further including the steps of:
- comparing the current level with the level of the same rank of the second structure, which level is represented by the received data, in order to determine the presence, in the first tree at the level of the same rank as the current level, of a descriptor of an element of the second tree, which element is no longer present in the second tree at the current level in the second version; and
- in the case that the element is no longer present in the second tree, deleting the descriptor of this element in the first tree data structure at the current level.

4. Method according to Claim 2, wherein, when updating a file on the first device, the first item of version information is updated then transmitted to other devices in a version change notification message.

5. Method according to Claim 2, wherein the request to the second device for receiving data that are representative of the second item of version information is transmitted after receiving a message from the second device indicating a change of version of the second tree.

6. Method according to Claim 1, wherein, to access an element of the first device on the basis of a descriptor of the first tree, the first device:
- sends a request to at least one other device in order to check it for the presence of the element on said at least one other device; and
- in the case that the element is present on said at least one other device, the first device obtains a copy of the element in order to store it in a memory on the first device.

7. Computer program including instructions for carrying out a method according to Claim 1, when it is executed by a processor.

8. Device including:
- a communication unit (603, 612) for sending and receiving messages in order to exchange at least computer files with at least one second device;
- a memory unit (602, 611) for storing computer files; and
- a processing unit (601, 610) for managing computer files according to a first data structure that is representative of a first file tree allowing files stored in the memory unit to be accessed,
the descendants of the root of the first tree corresponding to a first level of the tree, the descendants of nodes of the first tree corresponding to a second level of the tree and so on,
said processing unit being configured to carry out the method according to Claim 1.

9. System including:
- a first device (60) according to Claim 8, capable of storing computer files and of exchanging them with at least one second device; and
- at least one second device (61) capable of storing computer files and of exchanging them with the first device.
